# EUROPÄISCHE PATENTSCHRIFT

(11) **EP 4 441 401 B1**
(45) Veröffentlichungstag und Bekanntmachung des Hinweises auf die Patenterteilung: **28.01.2026**
(21) Anmeldenummer: 22823508.1
(22) Anmeldetag: 30.11.2022
(51) Int. Cl.: F16H 63/34, F16H 25/22

(54) **SPERRMECHANISMUS, ELEKTROMOTOR-ANTRIEBSEINHEIT, FAHRZEUG UND VERFAHREN ZUM SPERREN EINER WELLE EINES ANTRIEBSSTRANGS**
LOCKING MECHANISM, ELECTRIC MOTOR DRIVE UNIT, VEHICLE AND METHOD FOR LOCKING A SHAFT OF A DRIVE TRAIN
MÉCANISME DE VERROUILLAGE, UNITÉ D'ENTRAÎNEMENT DE MOTEUR ÉLECTRIQUE, VÉHICULE ET PROCÉDÉ DE VERROUILLAGE D'ARBRE DE CHAÎNE CINÉMATIQUE

(30) Priorität: 02.12.2021 DE 102021213737
(43) Veröffentlichungstag der Anmeldung: 09.10.2024
(73) Patentinhaber: Schaeffler Technologies AG & Co. KG, 91074 Herzogenaurach (DE)
(72) Erfinder: HEEGER, Christof, 80687 München (DE); FRITSCH, Karl Martin, 80687 München (DE)
(74) Vertreter: Schaeffler Technologies
(86) Internationale Anmeldenummer: PCT/EP2022/083924
(87) Internationale Veröffentlichungsnummer: WO 2023/099604

(56) Entgegenhaltungen:
- CN-A- 112 922 980
- DE-A1- 102019 128 078
- KR-A- 20190 074 644
- KR-B1- 101 462 805
- KR-B1- 101 462 805

## Beschreibung

Die Erfindung betrifft einen Sperrmechanismus, eine Elektromotor-Antriebseinheit, ein Fahrzeug sowie ein Verfahren zum Sperren einer Welle eines Antriebsstrangs.

Aus den Druckschriften CN 112922980 A und KR 20190074644 A ist jeweils ein Sperrmechanismus zwischen einem Sperraktuator und einer sperrbaren Welle eines Antriebsstrangs bekannt.

Eine der Erfindung zugrunde liegende Aufgabe ist es, einen verbesserten Sperrmechanismus, insbesondere für ein Fahrzeug, bereitzustellen.

Diese Aufgabe wird durch einen gemäß Anspruch 1 vorgeschlagenen und unter Schutz gestellten Sperrmechanismus gelöst.

Es wird ein Sperrmechanismus, insbesondere für ein Fahrzeug bzw. eine Parksperre eines Fahrzeugs, zwischen einem Sperraktuator und einer sperrbaren Welle eines Antriebsstrangs vorgeschlagen.

Dabei wird ein in einer Axial-Hubbewegung und längs zur Welle elektrisch aktuierbares Formschlusselement vorgeschlagen, welches mit einem wellenseitigen Komplement innerhalb eines Formschlussbereichs zumindest abschnittsweise formschlüssig fügbar ist, um die Welle zu sperren, und welches in einem Zustand, stirnseitig am wellenseitigen Komplement anliegend, längs zur Welle mittels zumindest eines elastischen Kraftübertragungsmittels gegen das wellenseitige Komplement einrastbar vorspannbar ist.

Dabei ist das Formschlusselement in einem Sperrzustand der Welle, in welchem das Formschlusselement und das wellenseitige Komplement im Formschlussbereich des Sperrmechanismus ineinandergreifen, gegen einen Gehäuseabschnitt einer Elektromotor-Antriebseinheit abstützbar, an welchem der Sperraktuator anbringbar ist.

Der Sperrmechanismus weist dabei im Formschlussbereich und in Umfangsrichtung der Welle ein Bewegungsspiel zwischen dem Formschlusselement und dem wellenseitigen Komplement auf, welches in Verbindung mit der besagten bzw. zuvor genannten Vorspannung des Formschlusselements gegen das wellenseitige Komplement eine Einrastung des Formschlusselements in das wellenseitige Komplement bzw. eine Fügung des Formschlusselements mit dem wellenseitigen Komplement ermöglicht.

Der Sperraktuator weist einen elektrischen Antrieb mit einem Stator auf, der einen dazu innenliegenden Rotor mit Permanentmagneten antreibt, wobei der Rotor in Gestalt einer Gewindemutter eines Schraubentriebs ausgeführt ist, welche je nach ihrer Drehrichtung in der Längsrichtung entlang einer Gewindespindel, mit welcher sie zusammenwirkt, verfahrbar ist.

Das Formschlusselement ist dabei über das zumindest eine elastische Kraftübertragungsmittel an den die Axial-Hubbewegung bewirkenden Bewegungsmechanismus des Sperraktuators angebunden ist.

Unter einem wellenseitigen Komplement ist dabei ein wellenseitiges Gegenstück zum Formschlusselement zu verstehen, welches im Formschlussbereich entsprechend komplementär zum Formschlusselement ausgebildet bzw. ausgeformt ist. Dabei kann es sich um einen entsprechend ausgeformten Abschnitt der Welle selbst oder eines mit der Welle gefügten, separaten und entsprechend ausgeformten Elements handeln, welcher mit dem Formschlusselement formschlüssig zusammenwirkt.

Unter einem elastischen Kraftübertragungsmittel ist dabei ein mechanischer Energiespeicher zur elastischen Vorspannung des Formschlusselements gegen das wellenseitige Komplement zu verstehen, etwa in Gestalt zumindest einer separaten Feder bzw. eines separaten Federelements und/oder in Gestalt zumindest eines in das Formschlusselement integrierten Federelementabschnitts.

Dieser Energiespeicher spannt das Formschlusselement gegen das wellenseitige Komplement vor, bis die Welle relativ zum Formschlusselement eine geeignete Ausrichtung für einen Formschluss einnimmt bzw. erfährt. Sobald eine solche Ausrichtung vorliegt, drückt dieser Energiespeicher das Formschlusselement zur Einrastung in das wellenseitige Komplement, so dass die Welle gesperrt bzw. blockiert wird.

Der vorgeschlagene Sperrmechanismus ermöglicht eine kompakte, bauraumsparende sowie kostengünstige Ausführung innerhalb eines Antriebsstrangs, insbesondere eines Fahrzeugs.

Zudem ist der vorgeschlagene Sperrmechanismus energiesparend umsetzbar, denn es bedarf für die besagte Vorspannung keiner aufzubringenden hohen Stellkräfte seitens des Aktuators. Bei der Fügung des Formschlusselements mit dem wellenseitigen Komplement wird nämlich nur das Formschlusselement und nicht auch noch das zu sperrende Element eines Antriebsstrangs bewegt.

**In** einer Ausführung ist das wellenseitige Komplement im Bereich eines Endes der Welle angeordnet. Dabei kann der Sperraktuator an dem Ende der Welle und dabei gegenüber liegend am Gehäuseabschnitt angebracht sein.

**In** einer weiteren Ausführung ist das Formschlusselement zudem koaxial zur Welle angeordnet. Dies ermöglicht eine besonders kompakte Ausführung einer einen solchen Sperrmechanismus aufweisenden Elektromotor-Antriebseinheit, insbesondere eines Fahrzeugs.

Das Formschlusselement kann dabei in Gestalt eines geschlossen umlaufenden, ringförmigen Elements ausgeformt sein, welches vorteilhafterweise koaxial zur sperrbaren Welle angeordnet sein kann.

Das Formschlusselement weist dabei eine Innenprofilierung auf, welche im Formschlussbereich mit einer zur Innenprofilierung komplementären Profilierung des wellenseitigen Komplements formschlüssig zusammenwirkt.

Ferner weist das Formschlusselement eine Außenprofilierung auf, welche komplementär zu einem Führungsabschnitt ausgeformt ist. Bei diesem Führungsabschnitt kann es sich um einen Abschnitt des Sperraktuators selbst handeln, welcher am Gehäuseabschnitt angebracht bzw. anbringbar bzw. befestigt bzw. befestigbar ist. Alternativ dazu kann der Führungsabschnitt am Gehäuseabschnitt selbst ausgeformt bzw. in diesen integriert bzw. integrierbar sein. Durch diesen Führungsabschnitt ist das Formschlusselement für die Axial-Hubbewegung zur Welle längsgeführt. Somit ist das Formschlusselement - je nach Umsetzung dieses Führungsabschnitts - mittelbar oder unmittelbar am besagten Gehäuseabschnitt abstützbar.

**In** einer weiteren Ausführung ist das Formschlusselement gegen einen Gehäuseabschnitt eines Elektromotorgehäuses oder eines (Reduktions-)Getriebegehäuses abstützbar. Der Sperrmechanismus ist dabei vorteilhafterweise in das Elektromotorgehäuse oder (Reduktions-)Getriebegehäuse integrierbar.

Es wird ferner eine Elektromotor-Antriebseinheit mit einem Sperrmechanismus der zuvor beschriebenen Art vorgeschlagen (Anspruch 9).

Zudem wird ein Fahrzeug mit einer solchen Elektromotor-Antriebseinheit oder einem Sperrmechanismus der zuvor beschriebenen Art vorgeschlagen (Anspruch 10).

Unter einem Fahrzeug ist dabei jede Art von Fahrzeug bzw. Kraftfahrzeug zu verstehen, welches elektromotorisch betrieben wird, insbesondere aber Personenkraftwagen und/oder Nutzfahrzeuge. Dabei handelt es sich vorzugsweise um teilautonom und insbesondere um vollautonom betriebene Fahrzeuge.

Es wird ferner ein Verfahren zum Sperren einer Welle eines Antriebsstrangs, insbesondere eines Fahrzeugs, mit einem Sperrmechanismus der vorhergehend beschriebenen Art vorgeschlagen (Anspruch 11).

Bei diesem Verfahren wird das Formschlusselement mit dem wellenseitigen Komplement unter Ausnutzung des Bewegungsspiels und bis zu einer vom Bewegungsspiel abhängigen Höchstdrehgeschwindigkeit der Welle zur Einrastung gebracht, indem das Formschlusselement in einem Zustand, stirnseitig am wellenseitigen Komplement anliegend, längs zur Welle über das mindestens eine elastische Kraftübertragungsmittel mit einer definierbaren Kraft gegen das wellenseitige

Komplement und bis zur Einrastung vorgespannt wird.

In einer Ausführung wird eine Welle des aus einem Stillstand anrollenden Fahrzeugs bis zu einer vom Bewegungsspiel abhängigen Höchstgeschwindigkeit des Fahrzeugs gesperrt.

Zur Vorspannung bedarf es dabei nur einer relativ geringen Kraftaufbringung seitens des Sperraktuators. Die aufgebrachte Vorspannkraft muss dabei nur so groß sein, dass sie das Formschlusselement - unter Ausnutzung des besagten Bewegungsspiels - in einer von einer Drehgeschwindigkeit der Welle bzw. Fahrzeuggeschwindigkeit abhängigen, zur Verfügung stehenden Zeit mit dem wellenseitigen Komplement zum Formschluss bringt.

Dabei wird auch nur das Formschlusselement des Sperraktuators und nicht auch noch die zu sperrende Welle des Antriebsstrangs bewegt.

Im Weiteren wird die Erfindung unter Bezugnahme auf Figurendarstellungen im Einzelnen erläutert. Aus den Unteransprüchen und der nachfolgenden Beschreibung bevorzugter Ausführungen ergeben sich weitere vorteilhafte Weiterbildungen der Erfindung. Hierzu zeigen, teilweise schematisch:
- Fig. 1: einen vorgeschlagenen Sperrmechanismus in einer perspektivischen Schnittdarstellung;
- Fig. 2: den in Fig. 1 gezeigten Sperrmechanismus in einer ebenen Schnittdarstellung;
- Fig. 3: den in Fig. 1 gezeigten Sperrmechanismus in einer weiteren, ebenen Schnittdarstellung;
- Fig. 4: einen Formschlussbereich des vorgeschlagenen Sperrmechanismus; und
- Fig. 5: eine Elektromotor-Antriebseinheit eines Antriebsstrangs.

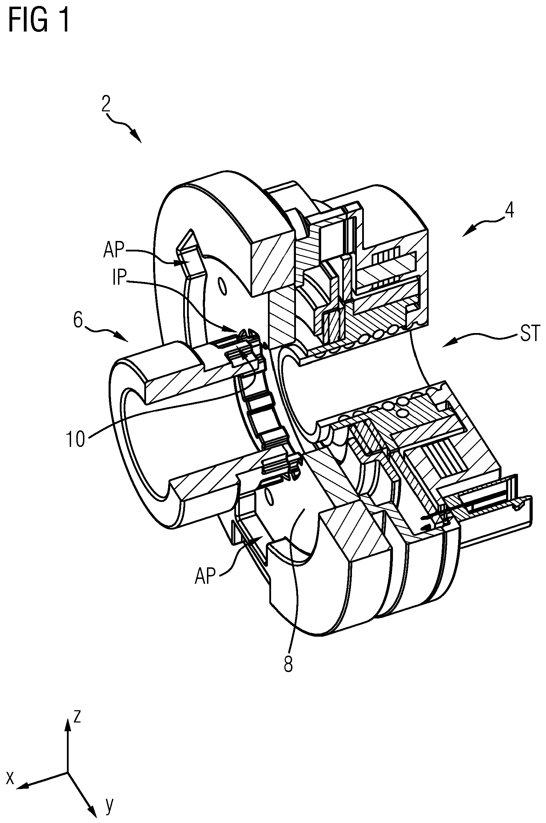

Fig. 1 veranschaulicht einen Sperrmechanismus 2, bei welchem ein Sperraktuator 4 mit einer sperrbaren Welle 6, etwa in Gestalt einer Hohlwelle eines Antriebsstrangs zusammenwirkt.

Der Sperraktuator 4 umfasst dabei ein Formschlusselement 8, welches in einer Axial-Hubbewegung in der Längsrichtung X - X und längs zur Welle 6 elektrisch aktuierbar ist.

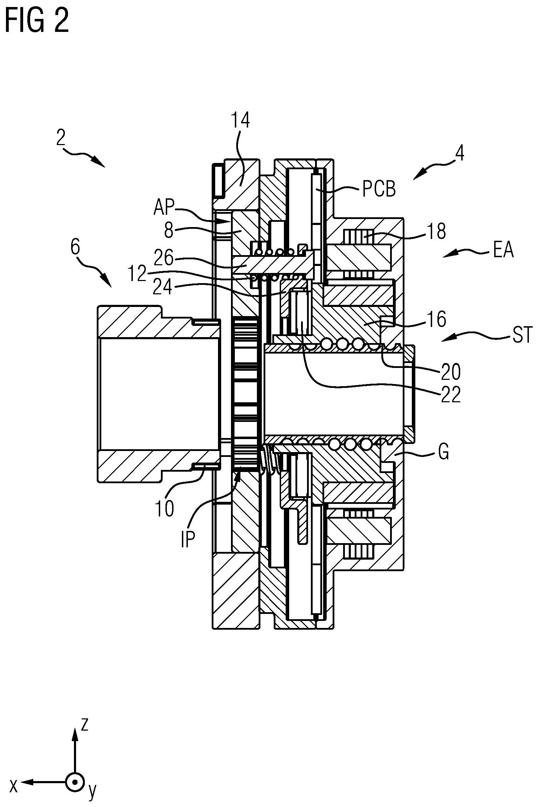

Fig. 2 zeigt dieses Formschlusselement 8 in einem Zustand, in welchem es nicht mit der Welle 6 gefügt ist. Die Welle 6 ist daher nicht gesperrt.

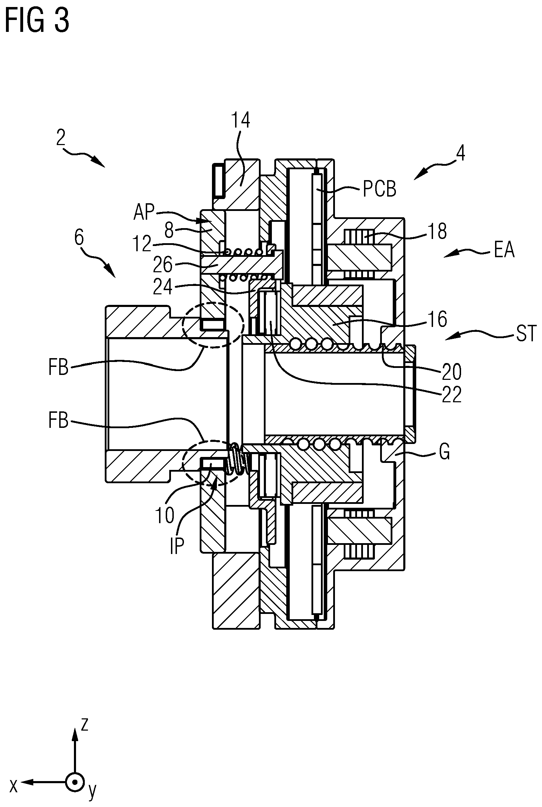

Fig. 3 hingegen zeigt dieses Formschlusselement 8 in einem mit der Welle 6 wirkverbundenen bzw. gefügten Zustand, in welchem das Formschlusselement 8 und die Welle 6 in einem Formschlussbereich FB, d.h. abschnittsweise formschlüssig ineinandergreifen, so dass die Welle 6 gesperrt ist.

Das Formschlusselement 8 ist dabei in Gestalt eines geschlossen umlaufenden, ringförmigen Elements mit einer für den Formschluss vorgesehenen umlaufenden Ausnehmung bzw. Öffnung ausgeformt. In dieser Ausnehmung sind - über ihren Umfang und in gleichmäßigen Abständen zueinander verteilt - radiale, nach innen vorspringende, steg- bzw. zahn- bzw. klauenartige Formschlusselemente ausgeformt, welche eine Innenprofilierung IP des Formschlusselements 8 bilden und welche im Formschlussbereich FB mit einem wellenseitigen Komplement in Formschluss bringbar sind.

Das wellenseitige Komplement ist dabei in einem Bereich des dem Sperraktuator 4 zugewandten Endes der Welle 6 in bzw. an der Welle 6 selbst ausgeformt, und zwar in Gestalt einer komplementär zur Innenprofilierung IP ausgeformten Wellenaußenprofilierung 10.

Das Formschlusselement 8 und die Welle 6 greifen dabei ähnlich einer Stirnradverzahnung formschlüssig ineinander.

Für die Axial-Hubbewegung in der Längsrichtung X - X ist das Formschlusselement 8 über bspw. drei und dabei gleichmäßig zueinander beabstandete, an seinem Außenumfang an- bzw. ausgeformte, radiale, nach außen vorspringende, klauenartige Formschlusselemente in einem dazu korrespondierend bzw. komplementär an- bzw. ausgeformten Führungsabschnitt 14 längs zur Welle 6 bzw. in deren Längsrichtung X - X geführt. Diese klauenartigen Formschlusselemente bilden dabei eine Außenprofilierung AP des Formschlusselements 8.

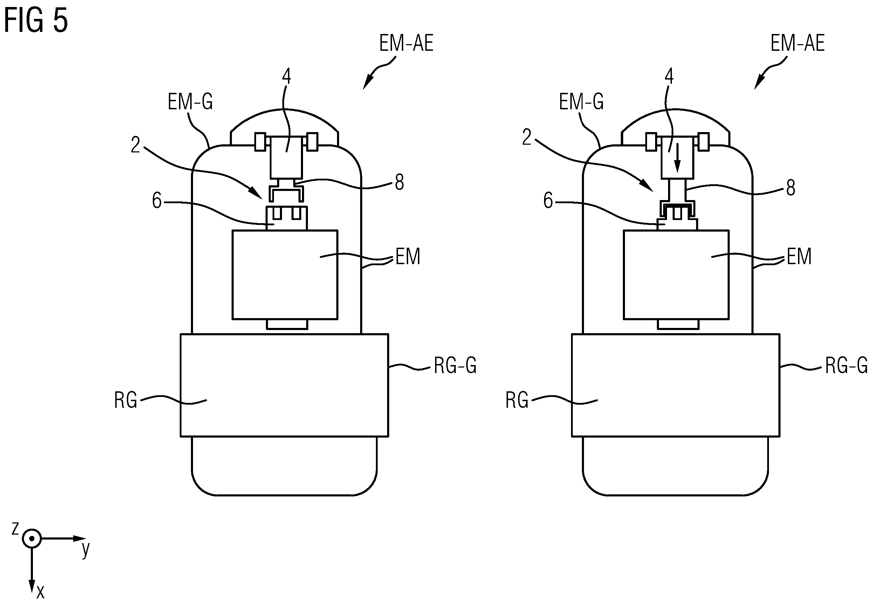

Der Führungsabschnitt 14 ist dabei bspw. als ein Abschnitt des Sperraktuators 4 ausgeführt und als solcher bspw. an einem Gehäuseabschnitt EM-G eines Elektromotors EM einer Elektromotor-Antriebseinheit EM-AE angebracht (siehe Fig. 5). Über diesen Führungsabschnitt 14 stützt sich das Formschlusselement 8 im Sperrzustand der Welle 6 gegen den Gehäuseabschnitt EM-G des Elektromotors EM ab. Im Sperrzustand der Welle 6 werden somit sowohl statische als auch dynamische Drehmomentlasten des Antriebsstrangs über diesen Führungsabschnitt 14 in den Gehäuseabschnitt bzw. das Gehäuse EM-G des Elektromotors EM eingeleitet.

Fig. 5 veranschaulicht eine solche Elektromotor-Antriebseinheit EM-AE eines Antriebsstrangs, insbesondere eines Fahrzeugs, welche den Elektromotor EM, ein Reduktionsgetriebe RG sowie den vorgeschlagenen Sperrmechanismus 2 aufweist.

Dabei ist der Sperraktuator 4 dem Ende der Welle 6 gegenüber liegend sowie koaxial zur ihr angeordnet und dabei am Gehäuseabschnitt EM-G des Elektromotors EM angebracht (siehe auch Fign. 1 bis 3). Der vorgeschlagene Sperrmechanismus 2 ist somit vorteilhafterweise in den Elektromotor EM integriert. Der Sperraktuator 4 ist dabei in das Elektromotorgehäuse EM-G integriert. Bezüglich des zuvor genannten Fahrzeugs veranschaulicht die Fig. 5 somit eine in den Elektromotor EM integrierte Parksperre.

Über bspw. drei - in der Längsrichtung X - X ausgerichtete - Schraubenfendern 12 ist das Formschlusselement 8 an einen elektrischen Antrieb EA des Sperraktuators 4 und - in der Längsrichtung X - X elastisch angebunden. Diese einzelnen Schraubenfendern 12 (mechanische Energiespeicher) sind dabei über ein zugeordnetes Stiftelement 26 geführt und in Umfangsrichtung des Formschlusselements 8 gleichmäßig zueinander beabstandet. Diese einzelnen Stiftelemente 26 verbinden dabei das Formschlusselement 8 mit einem in der Längsrichtung X - X zum Formschlusselement 8 beabstandeten, geschlossen umlaufenden, ringförmigen, abgesetzten Scheibenelement 24 mit einer umlaufenden Ausnehmung. Zwischen diesem Scheibenelement 24 und dem Formschlusselement 8 sind diese Schraubenfedern 12 mit einer gewissen Vorspannung angeordnet. Die Stiftelemente 26 erstrecken sich dabei durch das Scheibenelement 24 bis in das Formschlusselement 8, in welchem sie verankert sind.

Der elektrische Antrieb EA des Sperraktuators 4 weist einen Stator 18 auf, der einen dazu innenliegenden Rotor 16 mit Permanentmagneten antreibt. Der Rotor 16 ist dabei in Gestalt einer Mutter bzw. Gewindemutter eines Schraubentriebs ausgeführt, welche je nach ihrer Drehrichtung (links- oder rechtsdrehend) in der Längsrichtung X - X entlang einer - vorteilhafterweise hohl ausgebildeten - Gewindespindel 20, mit welcher sie zusammenwirkt, relativ zum Wellenende verfahrbar ist. Dieser Schraubentrieb wandelt eine Rotationsbewegung des Rotors 16 in eine Axialbewegung des Rotors 16 in der Längsrichtung X - X um.

Die Gewindespindel 20 ist dabei in einem Bereich ihres dem Wellenende abgewandten Endes mit einem Gehäuse G des Sperraktuators 4 verbunden und relativ zu diesem ortsfest. Die Gewindespindel 20 erstreckt sich dabei bis durch die Ausnehmung des Scheibenelements 24 und bis in einen Bereich vor dem Formschlusselement 8.

Zwischen dem Rotor 16 und dem Scheibenelement 24 ist ein Axiallager 22 angeordnet, über welches der Rotor 16 mit dem lediglich in der Längsrichtung X - X verfahrbaren Scheibenelement 24 zusammenwirkt. Das Axiallager 22 ermöglicht eine reibungsarme Drehbewegung des Rotors 16 relativ zum Scheibenelement 24, welches dabei eine Translationsbewegung in der Längsrichtung X - X ausführt.

Ein scheibenartiges in den Fign. 1 bis 3 gezeigtes Element PCB veranschaulicht dabei eine Leiterplatte (PCB = Printed Circuit Board) zur Ansteuerung des elektrischen Antriebs EA.

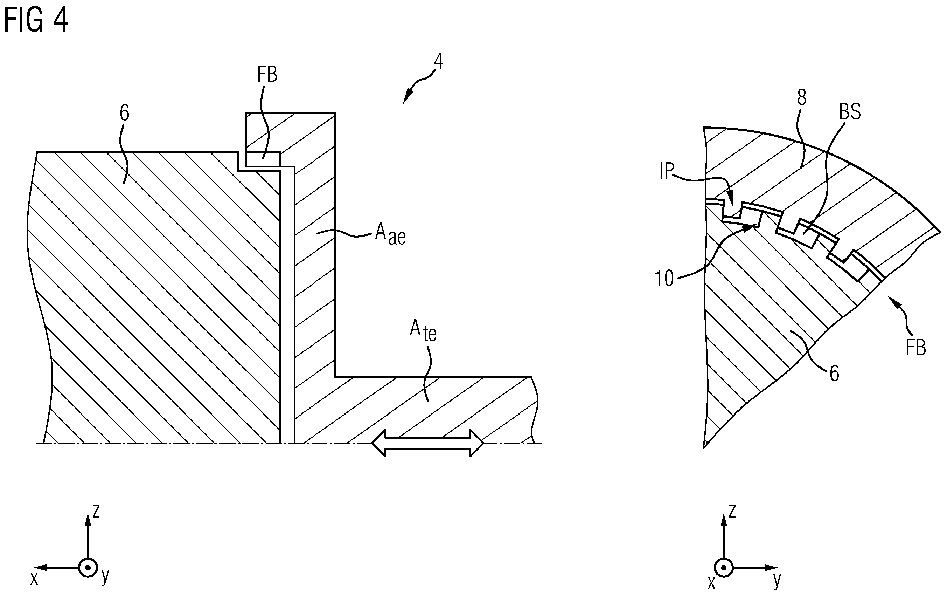

Fig. 4 veranschaulicht rein schematisch die Wirkverbindung zwischen dem Sperraktuator 4 und der Welle 6. Der Sperraktuator 4 weist dabei einen in der Längsrichtung X - X axial-elastischen Abschnitt Aₐₑ und einen torsionselastischen bzw. torsionsweichen Abschnitt Aₜₑ auf.

In Bezug auf die Fign. 1 bis 3 ist dieser axial-elastische Abschnitt Aₐₑ durch die einzelnen Energiespeicher 12 umgesetzt. Über diese einzelnen, axial-elastischen Energiespeicher 12 lassen sich axiale Stoßbelastungen bzw. Stöße in der Längsrichtung X - X im Zusammenhang mit dem Fügevorgang reduzieren. Der Abschnitt Aₜₑ hingegen ist durch das Formschlusselement 8 verwirklicht bzw. umgesetzt.

Dynamische Drehmomentlasten in Gestalt von Drehmomentspitzen eines Antriebsstrangs äußern sich in Bezug auf den Sperrmechanismus 2 in Gestalt von Stoßbelastungen in der Querrichtung Y - Y bzw. Z - Z, welche auf den Sperraktuator 4 bzw. dessen Formschlusselement 8 einwirken.

Fig. 4 veranschaulicht ferner den Formschlussbereich FB zwischen dem Formschlusselement 8 und der Welle 6 sowie ein diesem Formschlussbereich FB zugrundeliegendes Bewegungsspiel BS zwischen der Innenprofilierung IP des Formschlusselements 8 und der wellenseitigen Profilierung bzw. Wellenaußenprofilierung 10, und zwar in Umfangsrichtung der Welle 6.

Dieses Bewegungsspiel BS ermöglicht eine Sperrung der Welle 6 durch das Formschlusselement 8, sobald die Welle 6 eine entsprechende Ausrichtung zum Formschlusselement 8 erfährt, welcher es für einen Formschluss bzw. eine Fügung der Fügeelemente 6, 8 bedarf.

Im Zusammenhang mit dem zuvor genannten Fahrzeug bedeutet dies, dass das Fahrzeug in einer Parksituation, in welcher das Fahrzeug stillsteht, etwa auf einen Fahrerwunsch hin, gesperrt bzw. blockiert werden kann.

Sofern in dieser Parksituation die Ausrichtung der Welle 6 nicht derart ist, als dass sie die Sperrung durch das Formschlusselement 8 ermöglicht, kann das Formschlusselement 8 in einem Zustand, in welchem es stirnseitig an der Welle 6 anliegt, längs zur Welle 6 über die drei Schraubenfedern 12 mit einer definierbaren Kraft gegen die Welle 6 zur Einrastung vorgespannt werden. Wird die Welle 6 daraufhin nur etwas weiter verdreht bzw. gedreht, so kommt es zur Einrastung des Formschlusselements 8 mit der Welle 6, sobald eine Ausrichtung der Welle 6 erreicht wird, welche die Einrastung ermöglicht. Eine solche Weiter(ver)drehung der Welle 6 in der Parksituation kann dabei fahrzeugsystemseitig veranlasst werden.

Das Bewegungsspiel BS ermöglicht aber auch folgendes Notfall-Szenario in einem Fehlerfall, in welchem der Elektromotor EM der Elektromotor-Antriebseinheit EM-AE ausfällt.

Kommt es beim zuvor genannten Fahrzeug während des Fahrens zu einem Ausfall des Elektromotors EM der Elektromotor-Antriebseinheit EM-AE und wird das Fahrzeug daraufhin auf einer Straße mit einer Steigung bis zum Stillstand abgebremst, dann ermöglicht der zuvor beschriebene Sperrmechanismus 2 eine Sperrung bzw. Blockade des daraufhin aus dem Stillstand anrollenden Fahrzeugs, und zwar bis zu einer vom Bewegungsspiel BS abhängigen Höchstdrehgeschwindigkeit der Welle 6 bzw. Höchstgeschwindigkeit des Fahrzeugs.

Dabei wird das Formschlusselement 8 mit der Welle 6 unter Ausnutzung des Bewegungsspiels BS und bis zur vom Bewegungsspiel BS abhängigen Höchstdrehgeschwindigkeit der Welle 6 bzw. Höchstgeschwindigkeit des Fahrzeugs zur Einrastung gebracht, indem das Formschlusselement 8 in einem Zustand, stirnseitig an der Welle 6 anliegend, längs zur Welle 6 über die drei Schraubenfedern 12 mit einer definierbaren Kraft gegen die Welle 6 und bis zur Einrastung vorgespannt wird. Die Einrastung erfolgt schließlich, sobald die Welle 6 eine entsprechende Ausrichtung zum Formschlusselement 8 erfährt.

Obwohl in der vorhergehenden Beschreibung exemplarische Ausführungen erläutert werden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

## Patentansprüche

1. Sperrmechanismus (2), insbesondere für ein Fahrzeug, welcher einen Sperraktuator (4) und eine sperrbare Welle (6) eines Antriebsstrangs aufweist und zwischen dem Sperraktuator (4) und der sperrbaren Welle (6) angeordnet ist, bei welchem ein in einer Axial-Hubbewegung (X - X) und längs zur Welle (6) elektrisch aktuierbares Formschlusselement (8) in einem Zustand, stirnseitig an einem wellenseitigen Komplement (10) anliegend, mit welchem das Formschlusselement (8) abschnittsweise formschlüssig fügbar ist, längs zur Welle (6) mittels zumindest eines elastischen Kraftübertragungsmittels (12) gegen das wellenseitige Komplement (10) einrastbar vorspannbar ist, wobei das Formschlusselement (8) in einem Sperrzustand der Welle (6), in welchem das Formschlusselement (8) und das wellenseitige Komplement (10) in einem Formschlussbereich (FB) des Sperrmechanismus (2) ineinandergreifen, gegen einen Gehäuseabschnitt (EM-G) einer Elektromotor-Antriebseinheit (EM-AE) abstützbar ist, an welchem der Sperraktuator (4) anbringbar ist,
wobei der Sperrmechanismus (2) im Formschlussbereich (FB) und in Umfangsrichtung der Welle (6) ein Bewegungsspiel (BS) zwischen dem Formschlusselement (8) und dem wellenseitigen Komplement (10) aufweist,
**dadurch gekennzeichnet, dass**
der Sperraktuator (4) einen elektrischen Antrieb (EA) mit einem Stator (18) aufweist, der einen dazu innenliegenden Rotor (16) mit Permanentmagneten antreibt, wobei der Rotor (16) in Gestalt einer Gewindemutter eines Schraubentriebs (ST) ausgeführt ist, welche je nach ihrer Drehrichtung in der Längsrichtung (X - X) entlang einer Gewindespindel (20), mit welcher sie zusammenwirkt, verfahrbar ist.
wobei das Formschlusselement (8) über das zumindest eine elastische Kraftübertragungsmittel (12) an den die Axial-Hubbewegung (X - X) bewirkenden Bewegungsmechanismus des Sperraktuators (4) angebunden ist.

2. Sperrmechanismus (2) nach Anspruch 1, wobei das wellenseitige Komplement (10) im Bereich eines Endes der Welle (6) angeordnet ist.

3. Sperrmechanismus (2) nach Anspruch 2, wobei der Sperraktuator (4) an dem Ende der Welle (6) und dabei gegenüber liegend am Gehäuseabschnitt (EM-G) anbringbar ist.

4. Sperrmechanismus (2) nach Anspruch 3, wobei das Formschlusselement (8) koaxial zur Welle (10) angeordnet ist.

5. Sperrmechanismus (2) nach einem der vorhergehenden Ansprüche, wobei das Formschlusselement (8) in Gestalt eines geschlossen umlaufenden, ringförmigen Elements ausgeformt ist.

6. Sperrmechanismus (2) nach einem der vorhergehenden Ansprüche, wobei das Formschlusselement (8) eine Innenprofilierung (IP) aufweist, welche im Formschlussbereich (FB) mit einer komplementären Profilierung (10) des wellenseitigen Komplements formschlüssig zusammenwirkt.

7. Sperrmechanismus (2) nach einem der vorhergehenden Ansprüche, wobei das Formschlusselement (8) eine Außenprofilierung (AP), komplementär zu einem Führungsabschnitt (14) des Sperraktuators (4) oder des Gehäuseabschnitts (EM-G), aufweist, über welchen das Formschlusselement (8) für die Axial-Hubbewegung (X - X) längsgeführt ist und über welchen das Formschlusselement (8) gegen den Gehäuseabschnitt (EM-G) mittelbar oder unmittelbar abstütztbar ist.

8. Sperrmechanismus (2) nach einem der vorhergehenden Ansprüche, wobei das Formschlusselement (8) gegen einen Gehäuseabschnitt eines Elektromotorgehäuses (EM-G) oder eines (Reduktions-)Getriebegehäuses (RG-G) abstütztbar ist.

9. Elektromotor-Antriebseinheit (EM-AE) mit einem Sperrmechanismus (2) nach einem der vorhergehenden Ansprüche.

10. Fahrzeug mit einer Elektromotor-Antriebseinheit (EM-AE) nach Anspruch 9 oder einem Sperrmechanismus (2) nach einem der Ansprüche 1 bis 8.

11. Verfahren zum Sperren einer Welle (6) eines Antriebsstrangs, insbesondere eines Fahrzeugs, mit einem Sperrmechanismus (2) nach einem der vorhergehenden Ansprüche 1 bis 8, bei welchem das Formschlusselement (8) mit dem wellenseitigen Komplement (10) unter Ausnutzung des Bewegungsspiels (BS) und bis zu einer vom Bewegungsspiel (BS) abhängigen Höchstdrehgeschwindigkeit der Welle (6) zur Einrastung gebracht wird, indem das Formschlusselement (8) in einem Zustand, stirnseitig am wellenseitigen Komplement (10) anliegend, längs zur Welle (6) über das mindestens eine elastische Kraftübertragungsmittel (12) mit einer definierbaren Kraft gegen das wellenseitige Komplement (10) und bis zur Einrastung vorgespannt wird.

12. Verfahren nach Anspruch 11, bei welchem eine Welle (6) des aus einem Stillstand anrollenden Fahrzeugs bis zu einer vom Bewegungsspiel (BS) abhängigen Höchstgeschwindigkeit des Fahrzeugs gesperrt wird.

## Claims

1. Blocking mechanism (2), in particular for a vehicle, which comprises a blocking actuator (4) and a blockable shaft (6) of a drivetrain and is arranged between the blocking actuator (4) and the blockable shaft (6),
in the case of
which a form-fitting element (8), which can be electrically actuated in an axial stroke movement (X - X) and longitudinally in relation to the shaft (6), can, in a state in which said form-fitting element bears against an end face of a shaft-mounted complement (10) to which the form-fitting element (8) can be partially form-fittingly coupled, be biased longitudinally in relation to the shaft (6) against the shaft-mounted complement (10) by means of at least one elastic force transmission means (12) so as to be able to enter a latching engagement,
wherein, in a blocked state of the shaft (6), in which the form-fitting element (8) and the shaft-mounted complement (10) engage in one another in a form-fitting region (FB) of the blocking mechanism (2), the form-fitting element (8) can be supported against a housing portion (EM-G) of an electric motor drive unit (EM-AE), on which the blocking actuator (4) can be mounted,
wherein, in the form-fitting region (FB) and in the circumferential direction of the shaft (6), the blocking mechanism (2) has a movement clearance (BS) between the form-fitting element (8) and the shaft-mounted complement (10),
**characterized in that** the blocking actuator (4) has an electric drive (EA) with a stator (18), which drives a rotor (16) lying inside it by means of permanent magnets, wherein the rotor (16) is in the form of a threaded nut of a screw drive (ST) which can be moved along a threaded spindle (20), with which it interacts, in the longitudinal direction (X - X), depending on its direction of rotation,
wherein the form-fitting element (8) is attached to the movement mechanism of the blocking actuator (4) via the at least one elastic force transmission means (12), which movement mechanism brings about the axial stroke movement (X - X).

2. Blocking mechanism (2) according to Claim 1, wherein the shaft-mounted complement (10) is arranged in the region of an end of the shaft (6).

3. Blocking mechanism (2) according to Claim 2, wherein the blocking actuator (4) can be mounted on the end of the shaft (6) and thus in a manner situated opposite the housing portion (EM-G).

4. Blocking mechanism (2) according to Claim 3, wherein the form-fitting element (8) is arranged coaxially with the shaft (10).

5. Blocking mechanism (2) according to one of the preceding claims, wherein the form-fitting element (8) is shaped in the form of an annular element that runs around in closed fashion.

6. Blocking mechanism (2) according to one of the preceding claims, wherein the form-fitting element (8) has an inner profiling (IP) which form-fittingly interacts with a complementary profiling (10) of the shaft-mounted complement in the form-fitting region (FB).

7. Blocking mechanism (2) according to one of the preceding claims, wherein the form-fitting element (8) has an outer profiling (AP) which is complementary to a guide portion (14) of the blocking actuator (4) or of the housing portion (EM-G), via which guide portion the form-fitting element (8) is longitudinally guided for the axial stroke movement (X - X) and via which guide portion the form-fitting element (8) can be indirectly or directly supported against the housing portion (EM-G).

8. Blocking mechanism (2) according to one of the preceding claims, wherein the form-fitting element (8) can be supported against a housing portion of an electric motor housing (EM-G) or of a (reduction) gear housing (RG-G).

9. Electric motor drive unit (EM-AE) having a blocking mechanism (2) according to one of the preceding claims.

10. Vehicle having an electric motor drive unit (EM-AE) according to Claim 9 or a blocking mechanism (2) according to one of Claims 1 to 8.

11. Method for blocking a shaft (6) of a drivetrain, in particular of a vehicle, by means of a blocking mechanism (2) according to one of the preceding Claims 1 to 8, in the course of which method the form-fitting element (8) is brought into latching engagement with the shaft-mounted complement (10), utilizing the movement clearance (BS), up to a maximum rotational speed of the shaft (6) that depends on the movement clearance (BS), in that the form-fitting element (8), in a state in which it bears against an end face of the shaft-mounted complement (10), is biased longitudinally in relation to the shaft (6) and with a definable force against the shaft-mounted complement (10) via the at least one elastic force transmission means (12) until a latching engagement is obtained.

12. Method according to Claim 11, in the course of which, if the vehicle starts to move from a stationary position, a shaft (6) of the vehicle is blocked up to a maximum speed of the vehicle that depends on the movement clearance (BS).

## Revendications

1. Mécanisme de verrouillage (2), en particulier pour un véhicule, lequel comporte un actionneur de verrouillage (4) et un arbre (6) verrouillable d'une chaîne cinématique et qui est disposé entre l'actionneur de verrouillage (4) et l'arbre (6) verrouillable,
dans
lequel un élément à complémentarité de forme (8) pouvant être actionné électriquement en un mouvement alternatif axial (X - X) et longitudinalement par rapport à l'arbre (6) peut être précontraint de manière à pouvoir être enclenché contre le complément côté arbre (10), dans un état dans lequel il repose côté frontal sur un complément côté arbre (10), auquel l'élément à complémentarité de forme (8) peut être assemblé par complémentarité de forme par endroits, longitudinalement par rapport à l'arbre (6) au moyen d'au moins un moyen de transmission de force (12) élastique,
l'élément à complémentarité de forme (8) pouvant être soutenu contre une section de boîtier (EM-G) d'une unité d'entraînement de moteur électrique (EM-AE), sur laquelle l'actionneur de verrouillage (4) peut être installé, dans un état de verrouillage de l'arbre (6), dans lequel l'élément à complémentarité de forme (8) et le complément côté arbre (10) s'imbriquent l'un dans l'autre dans une zone à complémentarité de forme (FB) du mécanisme de verrouillage (2),
le mécanisme de verrouillage (2) présentant dans la zone à complémentarité de forme (FB) et dans la direction périphérique de l'arbre (6) un jeu de mouvement (BS) entre l'élément à complémentarité de forme (8) et le complément côté arbre (10),
**caractérisé en ce que** l'actionneur de verrouillage (4) comporte un entraînement électrique (EA) avec un stator (18), qui entraîne un rotor (16) situé à l'intérieur par rapport à celui-ci avec des aimants permanents, le rotor (16) étant réalisé sous la forme d'un écrou fileté d'un organe de vissage (ST), qui peut être déplacé selon sa direction de rotation dans la direction longitudinale (X - X) le long d'une broche filetée (20), avec laquelle il coopère,
l'élément à complémentarité de forme (8) étant attaché au mécanisme de déplacement, provoquant le mouvement alternatif axial (X - X), de l'actionneur de verrouillage (4) par l'au moins un moyen de transmission de force (12) élastique.

2. Mécanisme de verrouillage (2) selon la revendication 1, le complément côté arbre (10) étant disposé dans la zone d'une extrémité de l'arbre (6).

3. Mécanisme de verrouillage (2) selon la revendication 2, l'actionneur de verrouillage (4) pouvant être installé sur l'extrémité de l'arbre (6) et ainsi en vis-à-vis sur la section de boîtier (EM-G).

4. Mécanisme de verrouillage (2) selon la revendication 3, l'élément à complémentarité de forme (8) étant disposé coaxialement par rapport à l'arbre (10).

5. Mécanisme de verrouillage (2) selon l'une des revendications précédentes, l'élément à complémentarité de forme (8) étant formé sous la forme d'un élément annulaire fermé en périphérie.

6. Mécanisme de verrouillage (2) selon l'une des revendications précédentes, l'élément à complémentarité de forme (8) comportant un profilage intérieur (IP), lequel coopère par complémentarité de forme dans la zone à complémentarité de forme (FB) avec un profilage (10) complémentaire du complément côté arbre.

7. Mécanisme de verrouillage (2) selon l'une des revendications précédentes, l'élément à complémentarité de forme (8) comportant un profilage extérieur (AP) en complément d'une section de guidage (14) de l'actionneur de verrouillage (4) ou de la section de boîtier (EM-G), par laquelle l'élément à complémentarité de forme (8) est guidé longitudinalement pour le mouvement alternatif axial (X - X) et par laquelle l'élément à complémentarité de forme (8) peut être soutenu indirectement ou directement contre la section de boîtier (EM-G).

8. Mécanisme de verrouillage (2) selon l'une des revendications précédentes, l'élément à complémentarité de forme (8) pouvant être soutenu contre une section de boîtier d'un boîtier de moteur électrique (EM-G) ou d'une boîte (de réduction) (RG-G).

9. Unité d'entraînement de moteur électrique (EM-AE) avec un mécanisme de verrouillage (2) selon l'une des revendications précédentes.

10. Véhicule avec une unité d'entraînement de moteur électrique (EM-AE) selon la revendication 9 ou un mécanisme de verrouillage (2) selon l'une des revendications 1 à 8.

11. Procédé de verrouillage d'un arbre (6) d'une chaîne cinématique, en particulier d'un véhicule, avec un mécanisme de verrouillage (2) selon l'une des revendications précédentes 1 à 8, dans lequel l'élément à complémentarité de forme (8) est amené à s'enclencher avec le complément à arbre (10) en utilisant le jeu de mouvement (BS) et jusqu'à une vitesse de rotation maximale de l'arbre (6) dépendant du jeu de mouvement (BS), en ce que l'élément à complémentarité de forme (8) est précontraint, dans un état dans lequel il repose côté frontal sur le complément côté arbre (10), contre le complément côté arbre (10) et jusqu'à l'enclenchement longitudinalement par rapport à l'arbre (6) par l'au moins un moyen de transmission de force (12) élastique avec une force pouvant être définie.

12. Procédé selon la revendication 11, dans lequel un arbre (6) du véhicule démarrant hors d'un arrêt est verrouillé jusqu'à une vitesse maximale du véhicule dépendant du jeu de mouvement (BS).
